# EUROPEAN PATENT SPECIFICATION

(11) **EP 3 936 817 B1**
(45) Date of publication and mention of the grant of the patent: **20.05.2026**
(21) Application number: 20184799.3
(22) Date of filing: 08.07.2020
(51) Int. Cl.: G01C 3/08, G01C 1/02

(54) **CLOSE-RANGE ELECTRONIC DISTANCE MEASUREMENT**
NAHBEREICH ENTFERNUNGSMESSER
TÉLÉMÈTRE À COURTE DISTANCE

(43) Date of publication of application: 12.01.2022
(73) Proprietor: Hexagon Innovation Hub GmbH, 9435 Heerbrugg (CH)
(72) Inventor: STUTZ, Reto, 9434 Au (CH)
(74) Representative: Kaminski Harmann

(56) References cited:
- US-A- 5 633 716
- US-A1- 2012 057 021
- US-A1- 2012 262 550

## Description

### FIELD OF INVENTION

The present invention relates to a surveying instrument for the determination of the 3D coordinates of a target according to claim 1, in particular to be used for measurements in the close range. Furthermore, the present invention relates to a method for the determination of the 3D coordinates of a target according to claim 9 A surveying instrument according to the invention is particularly chosen from one of a theodolite, a total station, a laser tracker and a Building Information Modelling (BIM) machine. The field of the invention is geodesy and industrial metrology, as well as construction and monitoring.

### BACKGROUND OF THE INVENTION

Coordinate measuring devices for measuring the 3D coordinates of target objects, such as e.g. surveying instruments, frequently operate on the basis of electro-optical measurement systems. These devices generally emit optical radiation, typically laser radiation, in the direction of the target object to be measured, in order to determine the distance between the device and the target. Using angle measuring means, also the direction in which the target object is located, can be determined. By measuring the distance and angular position of the target, the 3D coordinates of said target, e.g. given in polar coordinates, are determined and typically subsequently processed further. The target object to be measured in the process reflects a portion of the emitted radiation back to the device, where it is received and converted into an electrical signal for distance determination. In addition to the measurement of naturally present targets, it is also possible to affix man-made targets, such as e.g. special target marks or reflectors to the target object, or use a mobile measuring rod equipped with a reflector, for example a single retroreflector or an arrangement of retroreflectors as a target object. Retroreflectors have the characteristic of simply inversing the direction of the incoming light beam, when the centre of the retroreflector is targeted, and reflecting the incoming light beam in inverse direction with a beam-offset, when a peripheral region of the retroreflector is targeted. US 5633716 A1 discloses an interferometric distance measurement system with a retroreflector having a misalignment detector fixed with respect to the target reflector which senses elevation offset and azimuth offset of the reflector. The elevation and azimuth offset signals are then provided to an elevation actuator and an azimuth actuator coupled to the reflector, respectively, which correct the elevation and azimuth angles of the target reflector to maintain continuous reflection of the return beam to the interferometry detector.

The emitted optical radiation is configured for electro-optical distance measurements, e.g. on the basis of a time-of-flight or phase measurement principle or a combination of these principles, such as described for example in EP1757956, JP4843128, or others.

Optical radiation is further used for the recognition of a target and/or an angle measurement of the direction in which a target object is located. A target mark could e.g. be embodied as a retroreflector or a visual feature of the target object, such as a corner, edge, boundary of a contrast area, etc. as for example described in WO2011/1414447 or EP1791082. In this respect, optical radiation which is emitted by the measuring device in pulsed or continuous manner, can support recognition of the targets in the field of view of the measuring device. A recognition and/or measurement of this type of target object in angle coordinates can be performed using a position-sensitive optical receiving element in the device, for example with an area sensor in CCD or CMOS technology, a PSD on the basis of the lateral photoelectric effect, or an arrangement of one or more photoreceptors, such as photodiodes, bi-cells, quadrature diodes, SPAD array, etc. Such a sensor is known as an automated target recognition and fine aiming module (ATR).

For angle determination, the measuring device is typically provided with one or more angle measuring means, such as e.g. angle meters or goniometers, with which, when the device or parts thereof are rotated for targeting purposes, an angular position of the rotated part, respectively an orientation of a targeting axis of the optical unit of the measuring device, can be determined.

For distance and angle determination, a separate or a common radiation can be emitted by the device to be used, say either measuring beam or radiation source can be used for both purposes, or one measuring beam can be used for the distance measurement and one beam for the angle determination or target recognition. For measurements of non-cooperative targets, the divergence of the measuring beam must be as small as possible, preferably diffraction-limited, otherwise the distance measurement could, on account of the undefined target object lighting, not provide the required measurement accuracy.

For example, tachymeters or total stations used in the field of surveying or geodesy, reach distance measurement accuracies of a few millimetres or even less than a millimetre when performing measurements to triple prisms or retro-reflective target marks over a few kilometres. The accuracy of the angle measurements typically lies in a range of less than 2 to 10 arc seconds or below. These requirements are impeded by the fact that such measuring devices are often employed in rough environments with widely varying environmental conditions, dependant on parameters such as e.g. temperature, humidity etc.

For increasing the accuracy of the angle measurement, nowadays increasingly standardised, a targeting state indicator, e.g. a so-called fine targeting unit, may be used to determine a position difference between the center of a retro-reflector and the point of impact of a measuring beam, e.g. a laser beam on the reflector. For example, a position sensitive detector is used to determine a deviation of the received measuring beam from a zero position. Using this measurable deviation, the targeting of the measuring device can be adapted to reposition the direction of the outgoing laser beam depending on this deviation in such a way that the deviation on a fine targeting sensor is reduced, e.g. "zeroed", so that the beam is oriented towards the center of the reflector. Another way of correcting the deviation of the received measuring beam from a zero position, is to determine the targeting error and based thereon, correct the measured angle to the target.

Some coordinate measuring instruments, in particular surveying instruments, have a shared exit and receiver optical unit, thereby meaning that at least one component is applied in the exit and the receiver optical unit at the same time, or influences both the exit and the receiver optical unit. One setup known from state of the art is a setup, where the measuring beam emitted by a radiation source is arranged off-axis with respect to the targeting axis, wherein the measuring beam is coupled onto the targeting axis or an axis parallel to the targeting axis by means of a deflection element within the targeting unit. Due to the specific setup, the deflection element initially deflecting the outgoing measuring beam towards the target is also present in the receiving optical path and prevents a part of the reflected measuring beam from reaching the detector. Within this text, the prevention of a part of the reflected measuring beam from reaching the detector due to the presence of a deflection element, is referred to as shading or partial shading of the detector, since the deflection element shades at least part of the detector, e.g. such that at least part of the detector surface is out of the line-of-sight of the reflected measuring beam and thus not accessible to at least a part of the measuring beam.

When performing a measurement with a surveying instrument of said setup, the impact of the partial shading of the returning beam cross section increases the closer the target and the smaller the measured distance, and decreases the further the target and the bigger the measured distance is. The far field may be defined as the distance range, where the shaded part of the returning beam cross section is small compared to the part of the beam cross section impinging on the detector, and the distance can, with a surveying instrument of said setup, be measured with a desired accuracy. The close range may be defined as the distance range, where the shaded part of the detector is large compared to the impinging beam cross section, such that the error or noise on the distance measurement exceeds a tolerable limit. The transition from far field to close range for standard state of the art surveying instruments typically lies between 5 m and 35 m.

When the amount of incident light is reduced, the distance measurement accuracy decreases or the distance cannot be measured at all. This is due to the (spatial) inhomogeneity of the laser profile. Due to the spatial inhomogeneity of the laser profile, the measured distance values vary within the cross section of the laser beam. When a reasonable amount of the measuring beam impinges on the detector, the measured values, depending on the spatial distribution of the beam, can be averaged, thereby yielding a relatively accurate result of the measured distance. However, when part of the beam is shaded, relevant portions of the returning beam are omitted and if the pulse shape is laterally inhomogeneous, then systematic distance errors are very probable. The partial shading of the returning beam behaves like a spatial optical filter. This leads to the effect that the measured distances vary strongly, depending on the position within the cross section of the beam profile. The bigger the shaded part is, compared to the part of the cross section of the laser beam, which impinges on the detector, the bigger the effect of omitting relevant portions of the detected beam, and the less accurately a distance can be measured.

In order to minimise systematic errors of the wave front of the laser beam and improve the accuracy of distance measurements in the close range, different attempts have been made to solve the above described problem, which mainly occurs in the close range. From the state of the art, it is e.g. known that an asymmetrical emitter opening reduces the problem, since the emitted beam is point-asymmetrical mirrored. Another possibility to circumvent the problem of shading of at least part of the detector, is to use an emitter with a parallax. When using an emitter with a parallax, the problem of shading of the detector can be reduced, which is due to the different setup. Another solution is the use of emitters with emitter zones which also transmit at least part of the reflected light, e.g. a 90:10 beam splitter. One attempt using transparent emitters is disclosed in JP3634772B2.

However, there is a need for a further improved surveying instrument and distance measurement method, particularly in the close range, to determine the distance between a surveying instrument and a target with appropriate accuracy, particularly sufficiently small distance measurement errors.

Depending on the type of surveying task, either a total station, a theodolite, a laser tracker or a Building Information Modelling (BIM) machine is needed. Furthermore, it is possible, that a scan of a surface as well as an accurate determination of a target position on said surface, or of a target position on the surface of another object is needed within the scope of one measurement.

### OBJECTIVE OF THE PRESENT INVENTION

It is an objective of the present invention to provide a surveying instrument with an increased measurement accuracy in the close range by solving the problem, that a (retro-) reflected beam is shaded by a component of the optical unit. Furthermore, it is an objective of the present invention, to provide a distance measurement method which offers increased measurement accuracy, especially in the close range.

The objective is accomplished by implementation of at least part of the characteristic properties of the independent claims. Characteristics, which further develop the invention in an alternative or preferable way, are found in the dependent claims. Within the scope of this text, the term "optical axis" will be used for general optical systems and any kind of telescope. The term "targeting axis" will be used in the specific case of an optical system of a surveying instrument. Furthermore, within the scope of this text, the expressions "distance measuring beam" and "measuring beam" will be used in parallel. The present invention is not limited to the embodiments described herein.

### CHARACTERISING PART

The present invention relates to a surveying instrument for the determination of the 3D coordinates of a retro-reflective target, particularly to a theodolite, a total station, a laser tracker, or a Building Information Modelling (BIM) machine, the surveying instrument comprising a radiation source for generating a measuring beam, an optical unit for emitting and receiving at least part of the measuring beam and defining a targeting axis, a detector which is suitable for distance measurements, wherein the detector is configured to detect at least part of the measuring beam reflected by the retro-reflective target, wherein the detector is shaded by at least one component of the optical unit, and a targeting state indicator configured to output information indicative of a targeting state of the emitted measuring beam with respect to the retro-reflective target, wherein an on-target state is given in which the targeting state indicator outputs information representing that the measuring beam is reflected by the retro-reflective target without beam-offset, wherein the surveying instrument is configured to, when performing a distance measurement, automatically target on the retro-reflective target with the measuring beam, such that the targeting state indicator outputs information indicative of a misaligned targeting state, in which the targeting state indicator outputs information representing that the measuring beam is reflected by the retro-reflective target with beam-offset, and detect, with the detector, the reflected measuring beam in the misaligned targeting state. When referring to the shaded part of the detector, it is meant, that a part of the receiving aperture or pupil, e.g. the central part, is shaded, and in the misaligned targeting state, the reflected measuring beam is shifted, such that the shading on the receiving apparatus decreases in comparison to state of the art devices. Thus when referring to the detector which is shaded by at least one component of the optical unit, it is meant, that the optical path to the detector is shaded.

In the misaligned targeting state, the distance measuring beam is shifted out of the shaded part of the receiving aperture or pupil to increase the amount of light which impinges on the detector, thereby reducing the measurement error and improving the distance measurement. The expressions shifting out of the receiving aperture or pupil, and, shifting out of the detector are within this text used interchangeably. With shifting out of the shaded part of the detector, it is meant shifting the measuring beam such, that it is laterally shifted with respect to the shaded part of the receiver channel, so a relevant portion of the ray bundle can pass by the shading optics in the receiver channel and reach the detector. The measuring beam could be shifted away from the shaded part of the detector in a way, such that still part of the reflected measuring beam is shaded, but the signal strength could be enhanced in comparison to well-aligned state of the art surveying systems. However, the measuring beam is preferably shifted away from the shaded part of the detector, such that no part of the distance measuring beam is shaded by any component of the exit optical unit. Furthermore, the measuring beam should only be shifted about a small amount, thereby meaning, such that the whole measuring beam impinges on the detector, and that the measuring beam is not partly or fully shifted across the edge of the photosensitive detector. Therefore, the surveying instrument is configured to, when performing the distance measurement, target on the retro-reflective target in a way that the measuring beam, in particular the reflected beam, is shifted out of the shaded part of the detector, such that the measuring beam is at the most partly shaded, preferably not shaded at all, when impinging on a detector surface of the detector. Increasing the amount of light, which impinges on the detector, say the amount of the reflected distance measuring beam, which reaches the detector, decreases the distance measurement error and therefore improves the accuracy of the distance measurement.

A targeting state indicator could be any device, which is configured to output information indicative of a targeting state of the emitted measuring beam. According to one aspect of the present invention, the targeting state indicator comprises an area detector, in particular a position sensitive area detector, for generating the indication of the targeting state, wherein the on-target state is given, if a reflex-spot of the reflected measuring beam impinges on a defined, particularly defined by calibration data, servo-control-point-position of the area detector, and wherein the misaligned targeting state is given, if the reflex spot impinges decentralised with reference to the servo-control-point-position, or a camera, wherein the camera comprises a photosensitive detector, e.g. a CCD or CMOS, and wherein the on-target state is given, if an image of the retro-reflective target is generated at a defined, particularly defined by calibration data, servo-control-point-position of the photosensitive detector, and wherein the misaligned targeting state is given, if the image is generated decentralised with reference to the servo-control-point-position. Furthermore, a targeting state could also be indicated by other methods, e.g. if an appropriate visual system is present, by use of cross hairs where the centre of the reticle defines the targeting-axis. The operator could then e.g. manually adjust the surveying instrument, such that an on-target state is given, or such that a misaligned state is given. The on-target state would then be indicated by the cross hair lying exactly on the target, and the misaligned state would be given, when the cross hair is not lying exactly on the target. The targeting state indicator could also be given by the detector of the inventive surveying instrument itself, e.g. if the detector is position sensitive.

According to an aspect of the present invention, the measuring beam comprises two partial measuring beams, wherein a first partial measuring beam is suitable to be used for generating indication of a targeting state on the targeting state indicator and a second partial measuring beam is suitable to be used for performing the distance measurement. For example, a first partial measuring beam could be a laser beam of a certain wavelength λ₁, and a targeting state indicator could be an area detector sensitive to the wavelength λ₁. A distance measuring beam could be a laser beam of a certain wavelength λ₂, wherein the distance could then be measured with a photosensitive detector suitable for distance measurements, which is sensitive to the wavelength λ₂.

The present invention further relates to a surveying instrument for the coordinative determination of position of a target, in particular of a retro-reflective target, the surveying instrument comprising a base, a support, which is rotatably mounted on the base so it is rotatable about a first axis of rotation, a carrier, which is rotatably mounted on the support, so it is rotatable about a second axis of rotation, an angle determining unit for acquiring first angle data with respect to a rotation of the support around the first angle of rotation, an angle determining unit for acquiring second angle data with respect to a rotation of the carrier around the second angle of rotation, wherein the measuring beam is emitted from the carrier.

According to an aspect of the present invention, the surveying instrument comprises a radiation source for generating a transmitted radiation beam, a base, a support, which is rotatably mounted on the base so it is rotatable about a first axis of rotation, a carrier, which is rotatably mounted on the support, so it is rotatable about a second axis of rotation, which is substantially orthogonal to the first axis of rotation, an exit optical unit for emitting a distance measuring beam provided by at least part of the transmitted radiation and defining a targeting axis, a receiving optical unit for receiving a reflected distance measuring beam whereas the exit optical unit and the receiving optical unit are at least partly shared, a detector, which is configured to acquire distance measurement data based on at least part of the reflected distance measuring beam, an angle determining unit for acquiring first angle data with respect to the rotation of the support about the first axis of rotation, at least one beam deflection element, which is designed to deflect, respectively steer the distance measuring beam in such a manner, that at least the emitted or the received distance measuring beam is shifted and/or tilted with respect to the targeting axis by means of actuation of the beam deflection element, an angle determining unit for acquiring second angle data with respect to the rotation of the carrier about the second angle of rotation, an angle determining unit for acquiring third angle data and determining the angle of the steered measuring beam with respect to the defined targeting axis, and evaluation means, which are configured to derive the position of the target based on the distance measurement data and the first, second and the third angle data.

According to the present invention the surveying instrument is designed for changing the direction of the measuring beam or shifting the measuring beam with respect to the targeting axis, in particular in an automated way, so that the measuring beam is shifted out of the shaded part of the detector, and impinges peripherally on the surface of the receiving aperture. In order to change the direction of the measuring beam or shift the measuring beam with respect to the targeting axis, the surveying instrument comprises a beam deflection element, evaluation means and means to adjust, in particular automatically adjust, the beam deflection element, in particular controlling means, so that the reflected measuring beam is deflected in a way which decreases the measurement error of the distance measurement. The evaluation means could e.g. be an evaluation unit; the controlling means could e.g. be a control unit. In particular, the evaluation means and the controlling means could be summed up to an evaluation and controlling means.

A beam deflection element could either affect the emitted measuring beam or the reflected measuring beam, or both. It is also possible to have more than one beam deflection element, and e.g. place one beam deflection element in a way, in which it affects the emitted measuring beam, and another beam deflection element in a way, in which it affects the reflected measuring beam. A beam deflection element could be any element, which is suitable for a controlled change of the orientation of the distance measuring beam or which is suitable to shift the distance measuring beam with respect to the targeting direction, thus any element that is suitable to shift and/or tilt the measuring beam with respect to the targeting axis in a controlled manner.

A beam deflection element could e.g. be a strongly deflecting object which is inserted into the optical beam path, but also any object which allows a movement e.g. rotation of the whole optical system, respectively the carrier, with respect to the target, such that the measuring beam is tilted and/or shifted with respect to the targeting axis, however the desired change could also be achieved by emitter deflection, whereas within the scope of the present invention emitter and radiation source are used in a similar manner. These elements could also be combined in accordance with the present invention.

According to one aspect of the present invention, the misaligned targeting state is generated by rotation of the carrier around at least the first axis of rotation or the second axis of rotation. The measuring beam could thus be deflected by a movement of the whole optical system, respectively the carrier. For example, assuming the surveying instrument was well-aligned to the optical centre of the retro-reflective target before movement such that an on-target state is given, the carrier could be slightly rotated around the rotation axis of the support, which is rotatably mounted on the base, or slightly rotated around the rotation axis of the carrier, which is rotatably mounted on the support, by slightly meaning that the measuring beam still impinges on the retro-reflective target but with a beam offset, and also the retro-reflected measuring beam impinges on the detector in the misaligned targeting state.

According to another aspect of the present invention, the misaligned targeting state is generated by pivoting a beam deflection element into the optical path of the measuring beam, particularly wherein the beam deflection element is comprised in the optical unit, particularly at least one beam deflection element being a mirror, a prism, a polygon, double optical wedge, refractive element, movable optical fibre or MOEMS-element, wherein the effect of beam deflection is particularly obtained by displacement and/or tipping of the beam deflection element and/or electro-optical control of the optical (refractive) properties of the beam deflection element. For example, a beam deflection element could be a mirror which is mounted inside the carrier, such that the mirror can be pivoted in the optical beam path of the emitted measuring beam.

According to another aspect of the present invention, the beam is deflected by emitter deflection. In a certain kind of setup, by tilting the emitter, the position of the reflected measuring beam on the receiving aperture can be shifted. For example, if the radiation source is a laser diode, thus generating a laser beam, and the laser beam is emitted via an exit optical unit with a mirror which is tilted by 45° with respect to the laser beam, such as to change the direction of the laser beam by 90°, and if then the orientation or position of the laser diode is changed, such that the angle of the laser beam with respect to the mirror is changed to an angle ≠45°, then the position of the reflected measuring beam impinging on the detector changes accordingly. The surveying instrument is, according to this embodiment of the present invention, configured to deflect, in particular automatically deflect, the beam by emitter deflection, depending on an indicated targeting state.

The optical paths of the emitted and reflected measuring beams can be constructed such that the beam deflection element influences either the reflected measuring beam or the emitted measuring beam, e.g. the beam deflection element could be positioned, such that it only affects the emitted measuring beam, say the mapping properties of the receiving channel are basically independent from the control of the beam deflection element, or there could be a beam deflection element affecting the emitted measuring beam and one beam deflection element affecting the reflected measuring beam, each of the beam deflection elements being independently controllable, or that one single beam deflection element affects both, the emitted measuring beam and the reflected measuring beam.

The optical unit for emitting and receiving at least part of the measuring beam comprises components for emitting a distance measuring beam, and components for receiving a reflected distance measuring beam. The exit optical unit for emitting a distance measuring beam and the receiving optical unit for receiving the reflected distance measuring beam are at least partly shared. For example, the exit optical unit could be built in such a way, that the radiation source is located such that the measuring beam, which is emitted by the radiation source and transmitted to the exit optical unit is orthogonal to the beam that is emitted by the exit optical unit along the targeting axis. The component changing the direction of the measuring beam could be a mirror. In order to shape or improve the beam properties, a lens or lens group can be inserted into the optical pathway of the measuring beam e.g. after the mirror, and before it is emitted towards the target. The receiving unit uses the same lens to improve the beam properties before the reflected measuring beam impinges on the detector. In this setup, the lens and the mirror are components, which are shared by the exit optical unit and the receiving optical unit, since the lens is used by both optical units, and the mirror is necessary only for the exit optical unit, but also affects the receiving optical unit, in particular negatively affects the receiving optical unit in the case of a close range measurement, by shading at least part of the detector.

The detector could be an optoelectronic sensor, which is big enough to allow for a peripheral displacement of the measuring beam on the sensitive area of the detector surface. The optoelectronic sensor could i.e. be a photoelectric cell, a PIN-photodiode, an avalanche photodiode (APD), a semiconductor photomultiplier such as e.g SiPM, or a SPAD-array. The detector needs to be configured to detect an optical signal and convert it to an electrical signal. Thus, the optoelectronic sensor needs to be adjusted to the properties of the reflected measuring beam, particularly it needs to be sensitive in a certain wavelength range, such that the wavelength of the reflected measuring beam lies in said wavelength range.

Several methods to perform an electro-optical distance measurement are known, such as e.g. the Time-of-Flight (TOF) measurement principle, such as the Frequency-Modulated Continuous Wave (FMCW) principle or the Coherent Frequency-Modulated Continuous Wave (CFMCW) principle, optical coherence distance measurements by using modulation schemes e.g. as used for frequency modulated continuous wave light detection and ranging (LiDAR), the phase measurement principle or distance measurement by laser triangulation. For surveying instruments, e.g. the Time-of-Flight (TOF) measurement principle or the phase measurement principle or a combination thereof are used, in order to fulfil the high demands on measurement accuracy.

The radiation source could be basically any component which transforms electrical energy into optical radiation energy, i.e. a light-emitting diode (LED), a laser, especially an actively triggered solid state laser or a laser diode such as gallium arsenide (GaAs) or indium phosphide (InP) laser diode. However, the radiation source has to be adapted to the distance measurement method and several other parameters, such as e.g. distance range, desired accuracy, etc. A laser diode, particularly a GaAs laser diode, is often used in instruments which base their distance measurement on the time-of-flight (TOF) or phase-difference principle. Most lasers emit spatially coherent light, thereby providing a high light focusing sharpness respectively a pulse with a high energy density. Nowadays fibre lasers, seeded fibre amplifiers and comb lasers are often used as radiation source for precise distance measurements.

According to one embodiment of the present invention, the evaluation and controlling means are comprised in a computer unit, and are configured to derive the position of the target based on the distance measurement data and orientation of the distance measuring beam. The distance can be measured by several methods known from state of the art, e.g. by a phase measurement principle or by the time-of-flight (TOF) method. The spatial orientation of the measuring beam can be determined by acquiring first angle data with respect to a rotation of the support around the first angle of rotation, and acquiring second angle data with respect to a rotation of the carrier around the second angle of rotation, wherein any angle measuring means may be used. Furthermore, an angle of a tilt of the measuring beam with respect to the targeting axis, such as sometimes found in a misaligned targeting state, may e.g. be determined by using a targeting state indicator, such as a camera or an area detector. The determination of the alignment of the targeting axis, precisely the determination of the vertical and horizontal angle and the inclination of the standing axis, as well as a determination of the angle of a tilt of the measuring beam with respect to the targeting axis, could for example be done in an automated way using sensors. The internal process is then completely regulated by microprocessors, and the result of the, in particular, horizontal and vertical angle measurement is provided in binary or digital form. The output thereof can be provided using a serial interface or can be shown on a display, if present.

According to one aspect of the present invention, the surveying instrument comprises a diffractive optical element, which is inserted into the optical beam path of the measuring beam, the diffractive optical element in particular being a moving diffuser, an optical wedge, in particular a close range optical wedge, or a close range divergence lens. The diffractive optical element is inserted into the optical beam path in order to homogenise the measuring beam before impinging on the reflector, in particular performing a spatial and/or temporal homogenisation. The measuring beam properties, respectively the measuring beam quality, e.g. the planarity of the modulated or pulsed wave front, plays a role for the measurement accuracy. The properties of the measuring beam could e.g. be improved by mixing the measuring beam, in particular for producing a multiplicity of at least partially overlapping partial beams which are placed one next to the other. Due to the temporal and spatial mixing, unequal distributions are levelled, as it were, and a uniform or at least more uniform measuring beam, that is to say, spatially homogenised measuring beam, is obtained. In one embodiment the surveying device is configured for temporal homogenisation of the measuring beam. The relative position of the measuring beam and the diffractive optical element could be dynamical, in particular periodically, variable, particularly by way of the diffractive optical element being arranged or arrangeable in the beam path to be movable such that the element is dynamically movable over the entire measurement beam. For example, the diffractive optical element could be vibrable, in particular perpendicular to a propagation axis of the measuring beam, and/or rotatable, in particular rotatable around a propagation axis of the measuring beam or an axis that has a parallel offset with respect thereto or with eccentricity.

The present invention further relates to a surveying instrument for the coordinative determination of position of a target, wherein the difference between the on-target state and the misaligned state is adjusted, particularly automatically adjusted, depending on a distance to the target, or based on a signal-strength of the reflected measuring beam, the signal-strength being dependant of the indicated targeting state, detected by the detector. For example, a beam deflection element embodied as a mirror could be mounted inside the carrier, such that the mirror can be pivoted in the optical beam path of the emitted measuring beam. The surveying instrument could then be configured to generate a misaligned targeting state by changing the angle, in particular automatically changing the angle, of the mirror with respect to the measuring beam, e.g. depending on a previously performed measurement of the distance to a target according to the state of the art, which indicated that the target is located in the close range.

The present invention in particular relates to a surveying instrument for the coordinative determination of position of a retro-reflective target, wherein the difference between the on-target state and the misaligned state is adjusted, particularly automatically adjusted, depending on a distance to the retro-reflective target, or based on a signal-strength of the reflected measuring beam, the signal-strength being dependant of the indicated targeting state, detected by the detector.

Furthermore, the present invention relates to a distance measurement method for the determination of a distance between a surveying instrument and a target. Depending on a distance to the target, the beam deflection element is adjusted, in particular automatically adjusted, thus the measuring beam is shifted and/or tilted, such that the measuring beam is shifted out of the shaded part of the detector and impinges peripherally on the receiving aperture.

In particular, the present invention relates to a distance measurement method for the determination of a distance between a surveying instrument, particularly a Theodolite, a Total Station, a Laser Tracker, or a Building Information Modelling (BIM) machine, and a retro-reflective target, with the surveying instrument having a radiation source, an optical unit, defining a targeting axis, a detector which is suitable for distance measurements, wherein the detector is configured to detect at least part of a measuring beam reflected by the retro-reflective target, wherein the detector is shaded by at least one component of the optical unit, and a targeting state indicator for indicating a targeting state with respect to the retro-reflective target, wherein an on-target state is given in which the targeting state indicator generates defined output, particularly defined by calibration data, representing that no misalignment with respect to the retro-reflective target occurs, the method containing the steps of targeting on the retro-reflective target and detecting a targeting state with the targeting state indicator, generating a measuring beam in the radiation source, emitting and receiving at least part of the measuring beam through the optical unit, wherein the emitted measuring beam is emitted towards the at least one retro-reflective target, and receiving at least part of the retro-reflected measuring beam and detecting it with the detector, thereby measuring the distance between the surveying instrument and the retro-reflective target, wherein, when performing a distance measurement, the targeting on the retro-reflective target is done, such that a misaligned targeting state is indicated by the targeting state indicator, in which misaligned targeting state the targeting state indicator generates defined output representing that the measuring beam is reflected by the retro-reflective target, such that a misalignment with respect to the retro-reflective target occurs, and the step of detecting, with the detector, the reflected measuring beam is done in the misaligned targeting state.

According to one aspect of the present invention the method comprises targeting on the retro-reflective target with the measuring beam, such that an on-target state is indicated by the targeting state indicator, determining the targeting direction, based on the indicated on-target state, performing a distance measurement, wherein the surveying instrument, targets on the retro-reflective target with the measuring beam, such that a misaligned targeting state is indicated by the targeting state indicator, in which misaligned targeting state the targeting state indicator generates defined output representing that the measuring beam is reflected by the retro-reflective target, such that a misalignment with respect to the retro-reflective target occurs, and detects, with the detector, the reflected measuring beam in the misaligned targeting state.

According to another aspect of the present invention the measuring beam is deflected with respect to the targeting axis by pivoting a deflecting object into the optical path of the measuring beam.

The present invention further relates to a method, the surveying instrument further having a base, a support, which is rotatably mounted on the base so it is rotatable about a first axis of rotation, a carrier, which is rotatably mounted on the support, so it is rotatable about a second axis of rotation, an angle determining unit for acquiring first angle data with respect to a rotation of the support around the first angle of rotation, an angle determining unit for acquiring second angle data with respect to a rotation of the carrier around the second angle of rotation, wherein the measuring beam is emitted from the carrier, and the carrier is rotated around at least the first axis of rotation or the second axis of rotation, thereby steering the measuring beam in such a way, that the misaligned state is generated.

The present invention further relates to a method, wherein a diffractive optical element is inserted into the optical beam path of the measuring beam, the diffractive optical element in particular being a moving diffuser, an optical wedge, or a near range divergence lens, such that the measuring beam is homogenised before impinging on the retro-reflector and/or the detector surface of the detector.

The present invention further relates to a method, wherein the level of misalignment of the measuring beam is automatically adjusted depending on the distance to the retroreflective target, or based on an angle-dependant signal-strength of the reflected measuring beam detected by the detector.

The inventive surveying instrument and method can also be applied to targets which diffusely reflect the light. The measuring beam, when impinging on such a target, is then reflected in such a way, that the reflected or scattered light propagates in all possible directions as a spherical wave, and only a certain amount of the emitted measuring beam is reflected towards the detector. The amount of light from the reflected measuring beam, which impinges on the detector is therefore less compared to when a retro-reflective target is used. Furthermore, the impinging measuring beam is not focused. In order to avoid the problem of shading of the detector for a diffusely reflecting target, the distance measuring beam may be deflected, respectively steered, in such a manner, that at least the emitted or the received distance measuring beam is tilted with respect to the targeting axis. Provided that the surveying instrument comprises a base, a support, which is rotatably mounted on the base so it is rotatable about a first axis of rotation, and a carrier, which is rotatably mounted on the support, so it is rotatable about a second axis of rotation, this can e.g. be accomplished by rotating the whole carrier around at least the first or the second axis of rotation.

The invention further relates to a computer program product with a program code, whereas the computer program product is saved on a machine-readable carrier, particularly saved on a surveying instrument according to the present invention, or a computer-data signal for the implementation of a method according to the present invention.

The inventive surveying instrument and the method according to the present invention will subsequently be described by means of schematically represented embodiments shown in the figures, whereas further advantages of the present invention are disclosed. Within these embodiments, the terms collimated measuring beam and divergent measuring beam are used mainly for comparing aspects of a rather divergent measuring beam, to a, in comparison, more focused or collimated measuring beam. As is known to persons skilled in the art, every laser beam shows a certain divergence, even a collimated beam having diffraction limited wave front properties. Because of the divergence, the laser beam diameter depends on the distance which the laser beam travels. It is shown in detail in:
- Fig. 1: an exemplary visualisation of the shading of the lens for a reflected divergent measuring beam at the telescope lens (a) and (b), and a reflected collimated measuring beam at the telescope lens (c) and (d), with a distance to the target of 18 m (a) and (c) and distance to the target of 2 m (b) an (d), in an on-target state.
- Fig. 2: a schematic illustration of an optical beam path in an embodiment of a state of the art setup, where the measurement is executed in an on-target state.
- Fig. 3: an exemplary visualisation of the shading of the lens for a distance to the target of 2 m (a) and 18 m (c), measured with a divergent measuring beam in an on-target state, and a general trend of a distance measurement with a distance to the target between 0 m and 18 m with a divergent measuring beam (b), with an embodiment of an inventive surveying instrument, when an on-target distance measurement is performed with a divergent reflected measuring beam.
- Fig. 4: an exemplary visualisation of the shading of the lens for a distance to the target of 2 m (a) and 18 m (c), measured with a collimated measuring beam in a misaligned targeting state, and a general trend of a distance measurement with a distance to the target between 0 m and 18 m with a collimated measuring beam (b), with an embodiment of an inventive surveying instrument, when a distance measurement in a misaligned targeting state is performed with a collimated reflected measuring beam.
- Fig. 5: a schematic illustration of an optical beam path in an embodiment of an inventive setup, where the measurement is executed in misaligned targeting state, and the misaligned targeting state is generated by tilting of a beam deflection element, e.g. a mirror.
- Fig. 6: a schematic illustration of the optical beam path of an embodiment of the inventive surveying instrument, where the measurement is executed in misaligned targeting state, and the misaligned targeting state is generated by rotation of the carrier.
- Fig. 7: a schematic illustration of the optical beam path of an embodiment of the inventive surveying instrument, where the measurement is executed in misaligned targeting state, and the misaligned targeting state is generated by emitter deflection.
- Fig. 8: a schematic illustration of an embodiment of an optical beam path in an inventive surveying instrument, when performing a distance measurement in a misaligned targeting state.

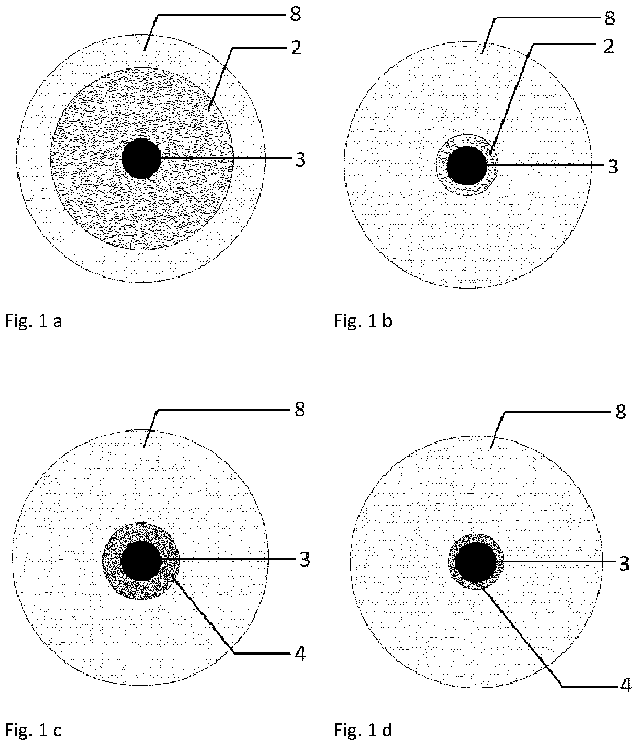

Fig. 1 shows an exemplary visualisation of the shading (3) at the aperture of the telescope front lens (8) for a distance to the target of 2m (b) and (d) and 18 m (a) and (c) for a distance measurement performed with a divergent (a) and (b) and a collimated measuring beam (c) and (d), when measuring in an on-target state, thus the targeting-axis of the telescope is aimed to the optical centre of a retro-reflector. Fig. 1 (a) shows an obscuration or a shading (3) at the aperture of the telescope lens or lens group (8), for a divergent measuring beam (2) for a distance to the target of 18 m and Fig. 1 (b) shows a shading (3) at the telescope lens (8) for a divergent measuring beam (2) for a distance to the target of 2 m, as seen from inside the telescope. Fig. 1 (c) shows a shading (3) at the telescope lens (8) for a collimated measuring beam (4) for a distance to the target of 18 m and Fig. 1 (d) shows a shading (3) at the telescope lens (8) for a distance to the target of 2 m, as seen from inside the telescope. The transmitted measuring beam (2) behind the shading (3) shows an annular shape, the central portion is blocked, only a small amount of energy can pass by and reach the optical detector. The shading (3) at the telescope lens (8) occurs due to a component of the optical system, thus only the boundary parts of the reflected measuring beam eventually reach the receiver, thereby leading to high measurement errors. This is the case e.g. when the laser beam exhibits a spatial modulation error, such that the time of flight varies within the beam cross section. If the central portion of the beam is blocked due to shading (3), only the annular portion of the beam contributes to the distance measurement, thereby leading to systematic errors. As can be seen in (b) and (d) the boundary parts of the reflected measuring beam, when measuring a distance to the target of 2 m, are even smaller compared to the boundary parts of the reflected measuring beam when measuring a distance to the target of 18 m (a) and (c). The accuracy of a distance measurement for a target at a distance of 2 m is therefore less compared to the accuracy of a distance measurement for a target at a distance of 18 m. When comparing the divergent measuring beam (2) and the collimated measuring beam (4), it can be seen that in the case of a divergent measuring beam (2) the amount of light from the boundary part of the reflected measuring beam (5) is higher than for the collimated measuring beam (4). In this example, the distance to the target of 2 m is classified as close-range, and the distance to the target of 18 m is classified as far-field. Although the ranges for transition between close range and far field may differ for the collimated (4) and the divergent measuring beam (2), the problem of limited accuracy of distance measurements in the close range arises for both, the divergent measuring beam (2) and the collimated measuring beam (4).

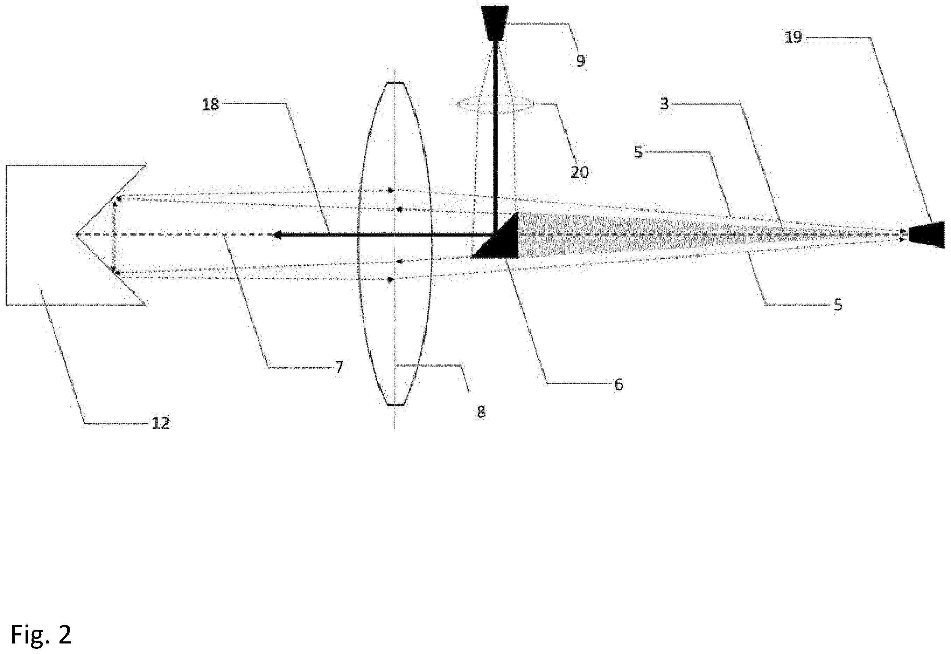

Fig. 2 shows a schematic illustration of an optical beam path in an embodiment of a state of the art setup, where the measurement is executed in an on-target state. The scale of length and size of the components is solely chosen to explain the principle, and is not limiting in any way. An emitter (9) generates a measuring beam, which is transferred towards the exit optical unit. In order to collimate or parallelise a measuring beam, a lens (20) can be inserted into the optical beam path. As can be seen in Fig. 2, in this example, the measuring beam is not yet exactly parallel after the lens (20) according to the explanations of Fig.1. The measuring beam is deflected by 90° by a beam deflection element (6), e.g. a mirror or reflecting prism, in such a way, that it is deflected towards another lens or lens group (8), in an orientation which is parallel to the targeting axis (7). The lens (8) is inserted in order to further parallelise the measuring beam. The divergence of the emitted measuring beam could e.g. be chosen to lie between 1 mrad and 3 mrad. The measuring beam is emitted (18) along the targeting axis (7) towards a target (12), in this embodiment shown as a retroreflective target (12). Since retroreflective targets (12) are manufactured to reflect an incoming light beam in exactly reverse direction, the reflected measuring beam (5) is inverted in direction by 180° to the emitted measuring beam (18). A marginal portion of the emitted measuring beam (18) hits the target (12) with a lateral offset to its centre, and is reflected with a point-symmetrical lateral offset with respect to the emitted marginal portion of the measuring beam (18). The divergence of the measuring beam remains unchanged by retro-reflection, leading to a further increase in diameter as the reflected measuring beam propagates back from the target (12) to the surveying instrument. The reflected measuring beam (5) enters the receiving optical unit through the lens (8) in an approximately parallel manner. An additional lens could be inserted in front of the receiver (19) in order to focus the reflected measuring beam (5) onto the receiver (19), which is typically very small, say in the order of hundreds of µm. It can be seen that due to the shading (3) generated by the beam deflection element (6), only the boundary parts of the reflected measuring beam (5) eventually reach the receiver (19). Since the emitted measuring beam (18) has a selected, optimised divergence, the diameter of the emitted measuring beam (18) increases with increasing distance to the target (12). Therefore, the problem of shading (3) gets worse, the smaller the distance to the target (12) is. The measuring beam shown in this figure is a collimated measuring beam, however the problem of shading also occurs for a divergent measuring beam.

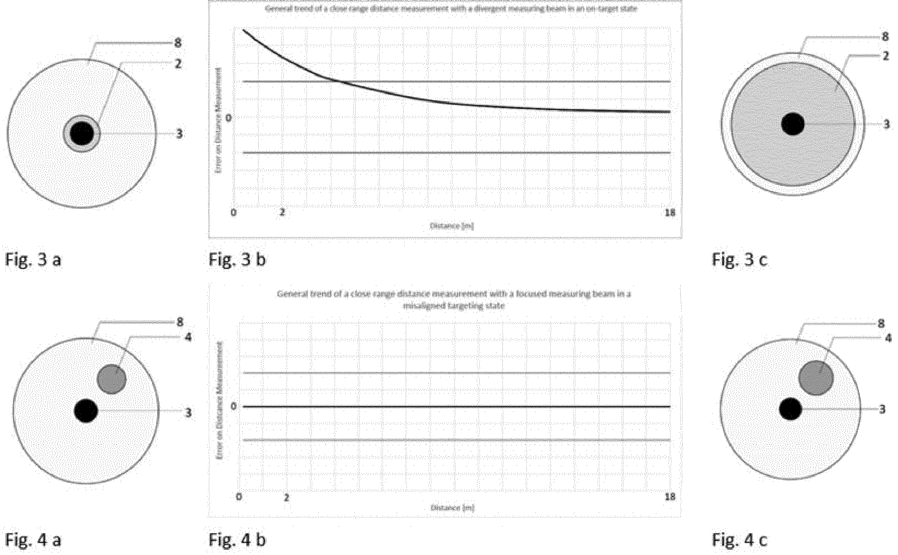

Fig. 3 shows an exemplary visualisation of the shading (3) at the telescope lens (8) for a distance to the target of 2 m (a) and 18 m (c), measured with a divergent measuring beam in an on-target state, and a general trend of a distance measurement with a distance to the target between 0 m and 18 m (b) with a divergent measuring beam (2), with an embodiment of an inventive surveying instrument, when an on-target distance measurement is performed with a divergent measuring beam (2). On-target distance measurements of this kind can also be performed with state of the art surveying instrument. Fig. 3 (a) shows the shading (3) at the telescope lens (8) at a distance to the target (12) of about 2 m, Fig. 3 (c) shows the shading (3) at the telescope lens (8) at a distance to the target (12) of about 18 m. Fig. 3 (b) shows a general trend of the systematic error on a distance measurement depending on the distance, when measuring with a divergent measuring beam (2). The two horizontal lines in (b) indicate the desired accuracy. It can be seen that for distances which are smaller than the crossing point of the upper horizontal line with the line indicating the error on a distance measurement, the accuracy requirements cannot be fulfilled. Some of the error sources reducing the accuracy of distance measurements are e.g. the at least partial shading, and stray light due to scattering of light at the surface of the beam deflection element

Fig. 4 shows an exemplary visualisation of the shading (3) at the telescope lens (8) for a distance to the target of 2 m (a) and 18 m (c), measured with a collimated measuring beam (4) in a misaligned targeting state, and a general trend of a distance measurement with a distance to the target between 0 m and 18 m (b) with a collimated measuring beam (4), with an embodiment of an inventive surveying instrument, when a distance measurement in the misaligned targeting state is performed with a collimated measuring beam (4). Fig. 4 (a) shows the shading (3) at the telescope lens (8) at a distance to the target of about 2 m, Fig. 3 (c) shows the shading (3) at the telescope lens (8) at a distance to the target of about 18 m. Fig. 4 (b) shows a general trend of the error on a distance measurement depending on the distance, when measuring with a collimated measuring beam (4). The two horizontal lines in (b), above and below the central, thick horizontal line, indicate the desired accuracy. It can be seen, that when measuring the distance in a misaligned targeting state, the accuracy requirements can be fulfilled.

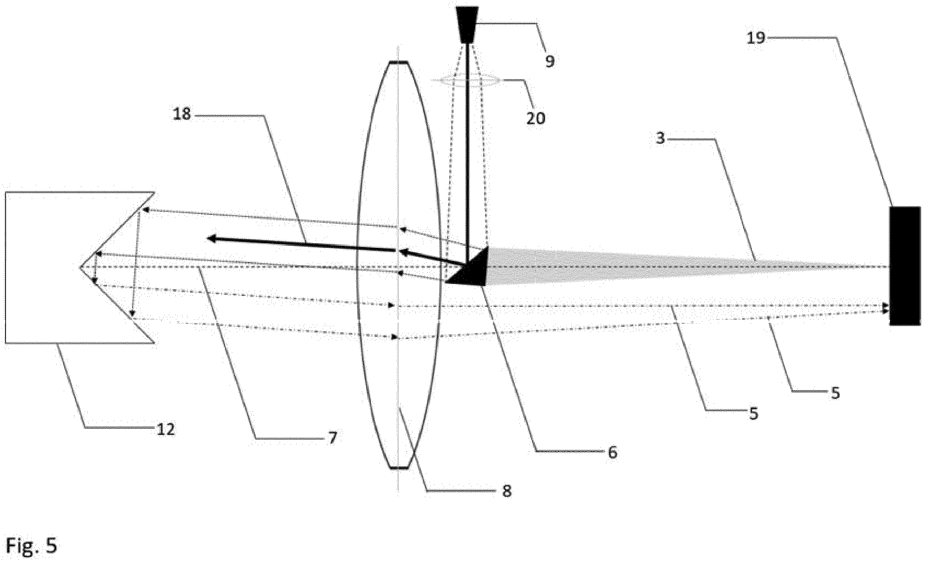

Fig. 5 shows a schematic illustration of an optical beam path in an embodiment of an inventive setup, where the measurement is executed in a misaligned targeting state. The scale of length and size of the components is solely chosen to explain the principle, and is not limiting in any way. An emitter (9) generates a measuring beam, which is transferred towards the exit optical unit. In order to efficiently collect the light from the optical unit and to generate a measuring beam which is as parallel as possible, a lens (20) can be inserted into the optical beam path. As can be seen in Fig. 5, in this example, the measuring beam is not yet perfectly parallel after the lens (20). The measuring beam is deflected, respectively steered by a beam deflection element (6) which lies in the targeting axis (7), e.g. a mirror, in such a way, that it is deflected towards another lens (8) in a non-parallel way with respect to the targeting axis (7). If e.g. the beam deflection element (6) is a mirror, the mirror can be tilted compared to its position in an on-target state, in order to deflect the measuring beam. The beam deflection element (6) is preferably located in close proximity to the lens (8), such that the measuring beam leaves the lens (8) with a certain angle with respect to the targeting axis (7), but approximately through the centre of the lens (8). The emitted measuring beam (18) then passes the lens (8) and is emitted towards a target (12), in this embodiment shown as a retroreflective target (12). Since retroreflective targets (12) are manufactured to reflect an incoming light beam in a parallel manner, the axis or principal ray of the reflected measuring beam (5) is parallel to the emitted measuring beam (18), except for the inevitable beam expansion, which depends on the distance to the target (12). The reflected measuring beam (5) enters the receiving optical unit through the lens (8) in an approximately parallel manner, and is focused before impinging on the receiver (19), which is in this example embodied as an avalanche photodiode (APD) array or an array of SPAD-arrays. It can be seen that, when measuring in the herein described misaligned targeting state, the shading (3) generated by the beam deflection element (6), does not affect the reflected measuring beam (5), and thus the distance measurement. The optical beam path is constructed such, that the reflected measuring beam (5) circumvents the beam deflection element (6), such that not only the boundary parts of the reflected measuring beam (5) are received by the receiver (19), such as in an on-target state, but the full reflected measuring beam (5) is received by the receiver (19). The measuring beam shown in this figure is a collimated measuring beam, however the same effect would occur for a divergent measuring beam, the emitted divergent beam e.g. having a full divergence angle of about 2 mrad.

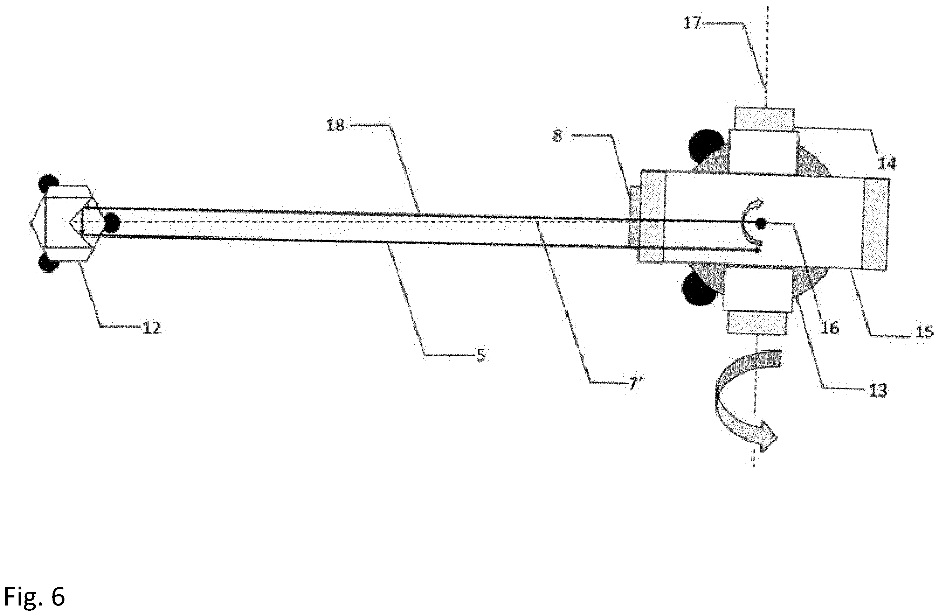

Fig. 6 shows a schematic illustration of the optical beam path of an embodiment of the inventive surveying instrument, where the measurement is executed in a misaligned targeting state. The scale of length and size of the components is solely chosen to explain the principle, and is not limiting in any way. The emitted measuring beam (18) passes along the targeting axis (7) in the misaligned targeting state, thus for better clarity of the figure, the targeting axis (7) in the misaligned targeting state is not shown in this figure. Instead the direction to the centre of the target (7') is shown. The emitted measuring beam (18) passes the lens (8) of the exit optical unit towards a target (12), herein shown as a retroreflective target (12). The emitted measuring beam (18) hits the retroreflective target (12) off-centre, say with a lateral beam offset with respect to the centre of the retroreflective target (12). The reflected measuring beam (5) is projected in opposite direction, whereas the lateral beam-offset of the reflected measuring beam (5) with respect to the centre of the retroreflective target (12) is equal to the lateral beam offset of the emitted measuring beam (18) with respect to the centre of the retroreflective target (12). The amount of misalignment to the target (12), more specifically the angle between the targeting axis (7) and the direction to the centre of the target (7') can e.g. be generated such that the reflected measuring beam (5) has a predetermined lateral dislocation at the lens (8), which could for example be chosen to be a quarter of the diameter of the lens, e.g. 10 mm. In this embodiment the beam-offset is generated by a movement, particularly rotation, of the whole optical system, respectively the carrier (15). The rotation is achieved by either rotating the support (14) around the first angle of rotation (16), or rotation of the carrier (15) around the second angle of rotation (17), or a combination thereof. Alternatively, the base (13) could be rotated in order to rotate the whole surveying instrument. A rotation of the whole optical system influences the emitted (18) and the reflected measuring beam (5). The emitted measuring beam (18) is not targeting the retroreflective target (12) perfectly centrally, but with an offset on the retroreflective target (12). Since retroreflective targets (12) are manufactured to reflect an incoming light beam in a parallel manner, the reflected measuring beam (5) is parallel to the emitted measuring beam (18). The reflected measuring beam (5) finally re-enters the telescope through the lens (8). The steering of the pivoting of the telescope allows to repetitively perform distance measurements and calculate the ratio of ideal angular misalignment by calculating the ratio of the required measuring beam offset to the actual raw distance. The measuring beam shown in this figure is a collimated measuring beam, however an inventive surveying instrument of said kind could also be used to measure a distance to a target (12) with a divergent measuring beam. In this embodiment, the surveying instrument e.g. determines the angle between the targeting axis (7) and the direction to the target (7') by using an automated angle measurement system (ATR), which directly measures the angle to the centre of the target object despite the misaligned targeting state. In an alternative procedure, the retro-reflector is centrally targeted in a first step, and the on-target state is assured with the targeting state indicator, and in a second step a misaligned targeting state is generated, e.g. by a rotation as described above, and measuring the distance to the target (12) in a misaligned targeting state.

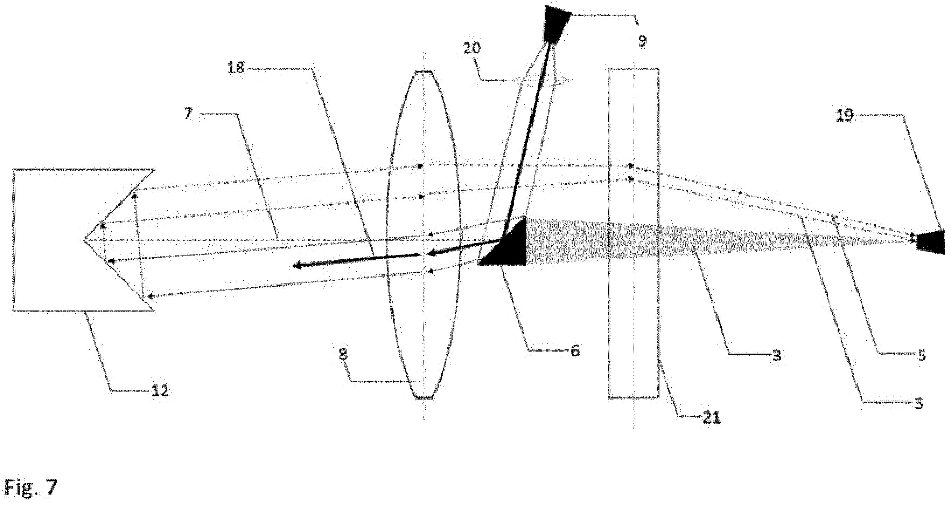

Fig. 7 shows a schematic illustration of an optical beam path in an embodiment of an inventive setup, where the measurement is executed in a misaligned targeting state. The scale of length and size of the components is solely chosen to explain the principle, and is not limiting in any way. An emitter (9) generates a measuring beam, which is transferred towards the exit optical unit. In order to generate a measuring beam which is as parallel as possible, a lens (20) can be inserted into the optical beam path. However, in this example, the measuring beam is not yet perfectly parallel after the lens (20). The measuring beam is deflected, respectively steered by a beam deflection element (6), e.g. a mirror, in such a way that it is deflected towards another lens (8) in a non-parallel way with respect to the targeting axis (7). In this embodiment, the beam deflection element (6) is in the same position and orientation as in an on-target state. The deflection of the measuring beam is achieved by emitter (9) deflection or translation. Positioning the emitter (9), such that the measuring beam, is emitted by the emitter (9) with an angle ≠90° with respect to the targeting axis (7), assures that the measuring beam, after deflection on the beam deflection element (6) is inclined with respect to the targeting axis (7), assumed the beam deflection element (6), in this case a mirror, lies in the targeting axis (7) and is not tilted. The beam deflection element (6) is preferably located in close proximity to the lens (8), such that the measuring beam leaves the lens with a certain angle with respect to the targeting axis (7), but approximately through the centre of the lens (8). The emitted measuring beam (18) then crosses the lens (8) and is emitted towards a target (12), in this embodiment shown as a retroreflective target (12). Since retroreflective targets (12) are manufactured to reflect an incoming light beam in a parallel manner, the reflected measuring beam (5) is parallel to the emitted measuring beam (18). The reflected measuring beam (5) enters the optical unit through the lens (8), where it is focused. The reflected measuring beam (5) enters the receiving optical unit through the lens (8) in an approximately parallel manner. An additional beam deflection element, respectively beam steering element (21) affecting the reflected measuring beam (5) is in this embodiment inserted in front of the receiver (19) in order to focus the reflected measuring beam (5) onto the receiver (19), which is typically very small, e.g. in the order of 50 to 500 µm. The beam steering element (21) could either consist of one optical component or could comprise multiple optical components, some of which are e.g. a moving lens, a negative lens, a liquid lens, a transparent or reflective polygon, a prism or a Micro-Electro-Mechanical (MEMS) beam steering element. It can be seen that, when measuring in the herein described misaligned targeting state, the shading (3) generated by the beam deflection element (6), does not affect the reflected measuring beam (5), and thus the distance measurement. The optical beam path is constructed such, that the reflected measuring beam (5) circumvents the beam deflecting element (6), such that not only the boundary parts of the reflected measuring beam (5) are received by the receiver (19), such as in an on-target state, but the full reflected measuring beam (5) is received by the receiver (19). The measuring beam shown in this figure is a collimated measuring beam, however an inventive surveying instrument of said kind could also be used to measure a distance with a divergent measuring beam.

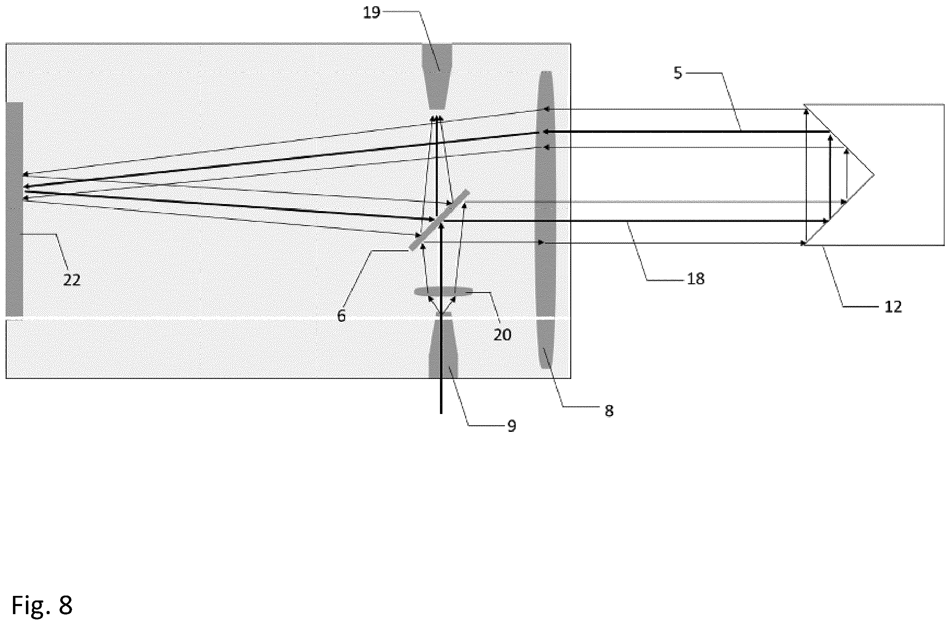

Fig. 8 shows a schematic illustration of an embodiment of an optical beam path in an inventive surveying instrument, when performing a distance measurement in a misaligned targeting state. The emitter (9) emits a measuring beam towards a beam deflection element (6), where it is transmitted towards a lens (8). In this embodiment, an additional lens (20) is inserted into the optical beam path directly after the emitter (9) in order to generate a parallel measuring beam. The emitted measuring beam (18) impinges on the retroreflective target (12) with a beam-offset with respect to the centre of the retroreflective target (12), and is reflected in a parallel manner with respect to the emitted measuring beam (18). The beam-offset arises by the misalignment given by the angle between the direction (7') and the targeting-axis (7), both of which are not shown in this figure. The reflected measuring beam (5) enters the receiving optical unit, and is focused towards a plane surface plate (22), which reflects the measuring beam towards the beam deflection element (6), herein a mirror. The mirror (6) then reflects the reflected measuring beam (5) towards a receiver (19). An additional lens could be inserted into the optical beam path in front of the receiver (19), for focusing the reflected measuring beam (5), since the receiver (19) is typically very small, e.g. in the range of 50 to 500 µm. The measuring beam shown in this figure is a focused measuring beam, however an inventive surveying instrument of said kind could also be used for measuring a distance with a divergent measuring beam.

Although the invention is illustrated above, partly with reference to some preferred embodiments, it must be understood that numerous modifications and combinations of different features of the embodiments can be made within the scope of the appended claims.

## Claims

1. A surveying instrument for the determination of the 3D coordinates of a retro-reflective target (12), particularly a Theodolite, a Total Station, a Laser Tracker, or a Building Information Modelling (BIM) machine, the surveying instrument comprising
• a radiation source (9) for generating a measuring beam,
• an optical unit (6,8) for emitting and receiving at least part of the measuring beam and defining a targeting axis (7),
• a detector (1) which is suitable for distance measurements, wherein the detector (1) is configured to detect at least part of the measuring beam (5) reflected by the retro-reflective target (12),
• wherein the detector is shaded (3) by at least one component (6) of the optical unit (6,8), and
• a targeting state indicator configured to output information indicative of a targeting state of the emitted measuring beam (10,11) with respect to the retro-reflective target (12), wherein an on-target state is given in which the targeting state indicator outputs information representing that the measuring beam is reflected by the retro-reflective target (12) without beam-offset,
**characterised in that** the surveying instrument is configured to, when performing a distance measurement, automatically
• target on the retro-reflective target (12) with the measuring beam, such that the targeting state indicator outputs information indicative of a misaligned targeting state, in which the targeting state indicator outputs information representing that the measuring beam is reflected by the retro-reflective target (12) with beam-offset, and
• detect, with the detector (1), the reflected measuring beam (5) in the misaligned targeting state.

2. A surveying instrument according to claim 1, **characterised in that** the surveying instrument is configured to, when performing the distance measurement, target on the retro-reflective target (12) in a way that the measuring beam is shifted, such that the measuring beam is at the most partly shaded, preferably not shaded at all, when impinging on a detector surface of the detector (1).

3. A surveying instrument according to claim 1 or 2, **characterised in that** the targeting state indicator comprises
• an area detector for generating the indication of the targeting state, wherein the on-target state is given, if a reflex-spot of the reflected measuring beam impinges on a defined, particularly defined by calibration data, servo-control-point-position of the area detector, and wherein the misaligned targeting state is given, if the reflex spot impinges decentralised with reference to the servo-control-point-position, or
• a camera, wherein the camera comprises a photosensitive detector, and wherein the on-target state is given, if an image of the retro-reflective target is generated at a defined, particularly defined by calibration data, servo-control-point-position of the photosensitive detector, and wherein the misaligned targeting state is given, if the image is generated decentralised with reference to the servo-control-point-position.

4. A surveying instrument according to any of the preceding claims, **characterised in that** the measuring beam comprises two partial measuring beams, wherein a first partial measuring beam is suitable to be used for generating indication of a targeting state on the targeting state indicator and a second partial measuring beam is suitable to be used for performing the distance measurement.

5. A surveying instrument according to any of the preceding claims, **characterised in that** the surveying instrument comprises
• a base (13),
• a support (14), which is rotatably mounted on the base (13) so it is rotatable about a first axis of rotation (16),
• a carrier (15), which is rotatably mounted on the support (14), so it is rotatable about a second axis of rotation (17),
• an angle determining unit for acquiring first angle data with respect to a rotation of the support (14) around the first angle of rotation (16),
• an angle determining unit for acquiring second angle data with respect to a rotation of the carrier (15) around the second angle of rotation (17),
wherein the measuring beam is emitted from the carrier (15).

6. A surveying instrument according to claim 5, **characterised in that** the misaligned targeting state is generated by
• rotation of the carrier (15) around at least the first axis of rotation (16) or the second axis of rotation (17), or
• pivoting a beam deflection element (6) into the optical path of the measuring beam, particularly where the beam deflection element (6) is comprised in the optical unit (6,8), particularly at least one beam deflection element (6) being a mirror, a prism, a polygon, double optical wedge, refractive element, movable optical fibre or MOEMS-element, wherein the effect of beam deflection is particularly obtained by displacement and/or tipping of the beam deflection element (6) and/or electro-optical control of the optical (refractive) properties of the beam deflection element (6).

7. A surveying instrument according to any of the preceding claims, **characterised in that** a diffractive optical element is inserted into the optical beam path of the measuring beam, the diffractive optical element in particular being a moving diffuser, an optical wedge, or a close range divergence lens.

8. A surveying instrument according to any of the preceding claims, **characterised in that** the difference between the on-target state and the misaligned state is adjusted, particularly automatically adjusted,
• depending on a distance to the retro-reflective target (12), or
• based on a signal-strength of the reflected measuring beam (5), the signal-strength being dependant of the indicated targeting state, detected by the detector (1).

9. Distance measurement method for the determination of a distance between a surveying instrument, particularly a Theodolite, a Total Station, a Laser Tracker, or a Building Information Modelling (BIM) machine, and a retro-reflective target (12), with the surveying instrument having
• a radiation source (9)
• an optical unit (6,8), defining a targeting axis,
• a detector (1) which is suitable for distance measurements, wherein the detector (1) is configured to detect at least part of a measuring beam (5) reflected by the retro-reflective target (12),
• wherein the detector (1) is shaded (3) by at least one component (6) of the optical unit (6,8), and
• a targeting state indicator for indicating a targeting state with respect to the retro-reflective target (12), wherein an on-target state is given in which the targeting state indicator generates defined output, particularly defined by calibration data, representing that no misalignment with respect to the retro-reflective target (12) occurs,
the method containing the steps:
• targeting on the retro-reflective target (12) and detecting a targeting state with the targeting state indicator,
• generating a measuring beam in the radiation source (9),
• emitting and receiving at least part of the measuring beam (10,11) through the optical unit (6,8), wherein the emitted measuring beam (10,11) is emitted towards the at least one retro-reflective target (12),
• receiving at least part of the retro-reflected measuring beam (5) and detecting it with the detector (1), thereby measuring the distance between the surveying instrument and the retro-reflective target (12),
**characterised in that,** when performing a distance measurement,
• the targeting on the retro-reflective target (12) is done, such that a misaligned targeting state is indicated by the targeting state indicator, in which misaligned targeting state the targeting state indicator generates defined output representing that the measuring beam is reflected by the retro-reflective target (12), such that a misalignment with respect to the retro-reflective target (12) occurs, and
• the step of detecting, with the detector (1), the reflected measuring beam (5) is done in the misaligned targeting state.

10. Method **characterised in that** the method comprises
• targeting on the retro-reflective target (12) with the measuring beam, such that an on-target state is indicated by the targeting state indicator,
• determining the targeting direction, based on the indicated on-target state,
• performing a distance measurement according to claim 9.

11. Method according to claim 9 or 10, **characterised in that** the measuring beam is deflected with respect to the targeting axis by pivoting a beam deflection element (6) into the optical path of the measuring beam.

12. Method according to any of claims 9 to 11, the surveying instrument further having
• a base (13),
• a support (14), which is rotatably mounted on the base (13) so it is rotatable about a first axis of rotation (16),
• a carrier (15), which is rotatably mounted on the support (14), so it is rotatable about a second axis of rotation (17),
• an angle determining unit for acquiring first angle data with respect to a rotation of the support (14) around the first angle of rotation (16),
• an angle determining unit for acquiring second angle data with respect to a rotation of the carrier (15) around the second angle of rotation (17),
**characterised in that** the measuring beam is emitted from the carrier (15), and the carrier (15) is rotated around at least the first axis of rotation (16) or the second axis of rotation (17), thereby steering the measuring beam in such a way, that the misaligned state is generated.

13. Method according to any of claims 9 to 12, **characterised in that** a diffractive optical element is inserted into the optical beam path of the measuring beam, the diffractive optical element in particular being a moving diffuser, an optical wedge, or a near range divergence lens, such that the measuring beam is homogenised before impinging on the retro-reflector or the detector surface of the detector (1).

14. Method according to claims 9 to 13, **characterised in that** the level of misalignment of the measuring beam is automatically adjusted
• depending on the distance to the retroreflective target (12), or
• based on an angle-dependant signal-strength of the reflected measuring beam (5) detected by the detector (1).

15. Computer program product with a program code, **characterised in that** the computer program product is saved on a machine-readable carrier (15), particularly saved on a surveying instrument according to any of the claims 1 to 8, or computer-data-signal for the implementation of a method according to claims 9 to 14.

## Patentansprüche

1. Vermessungsinstrument zur Bestimmung der 3D-Koordinaten eines retroreflektierenden Ziels (12), insbesondere ein Theodolit, eine Totalstation, ein Lasertracker oder eine Maschine zur Bauwerkinformationsmodellierung (BIM), wobei das Vermessungsinstrument Folgendes umfasst:
• eine Strahlungsquelle (9) zum Erzeugen eines Messstrahls,
• eine optische Einheit (6, 8) zum Aussenden und Empfangen zumindest eines Teils des Messstrahls und zum Definieren einer Zielausrichtungsachse (7),
• einen Detektor (1), der für Entfernungsmessungen geeignet ist, wobei der Detektor (1) dafür konfiguriert ist, zumindest einen Teil des vom retroreflektierenden Ziel (12) reflektierten Messstrahls (5) zu detektieren,
• wobei der Detektor durch mindestens eine Komponente (6) der optischen Einheit (6, 8) abgeschattet ist (3), und
• einen Zielausrichtungszustands-Anzeiger, der dafür konfiguriert ist, Informationen auszugeben, die einen Zielausrichtungszustand des ausgesendeten Messstrahls (10, 11) in Bezug auf das retroreflektierende Ziel (12) anzeigen, wobei ein auf das Ziel ausgerichteter Zustand gegeben ist, in dem der Zielausrichtungszustands-Anzeiger Informationen ausgibt, die angeben, dass der Messstrahl von dem retroreflektierenden Ziel (12) ohne Strahlversatz reflektiert wird,
**dadurch gekennzeichnet, dass** das Vermessungsinstrument dafür konfiguriert ist, bei der Durchführung einer Entfernungsmessung automatisch
• das retroreflektierende Ziel (12) mit dem Messstrahl anzuvisieren, sodass der Zielausrichtungszustands-Anzeiger Informationen ausgibt, die einen fehlausgerichteten Zielausrichtungszustand anzeigen, in dem der Zielausrichtungszustands-Anzeiger Informationen ausgibt, die bedeuten, dass der Messstrahl von dem retroreflektierenden Ziel (12) mit Strahlversatz reflektiert wird, und
• mit dem Detektor (1) den reflektierten Messstrahl (5) im fehlausgerichteten Zielausrichtungszustand zu detektieren.

2. Vermessungsinstrument nach Anspruch 1, **dadurch gekennzeichnet, dass** das Vermessungsinstrument dafür konfiguriert ist, bei der Durchführung der Entfernungsmessung das retroreflektierende Ziel (12) so anzuvisieren, dass der Messstrahl verschoben wird, sodass der Messstrahl höchstens teilweise abgeschattet, vorzugsweise überhaupt nicht abgeschattet ist, wenn er auf eine Detektoroberfläche des Detektors (1) auftrifft.

3. Vermessungsinstrument nach Anspruch 1 oder 2, **dadurch gekennzeichnet, dass** der Zielausrichtungszustands-Anzeiger Folgendes umfasst:
• einen Flächendetektor zum Erzeugen der Anzeige des Zielausrichtungszustands, wobei der auf das Ziel ausgerichtete Zustand gegeben ist, wenn ein Reflexfleck des reflektierten Messstrahls auf eine definierte, insbesondere durch Kalibrierungsdaten definierte Servosteuerungspunkt-Position des Flächendetektors auftrifft, und wobei der fehlausgerichtete Zielausrichtungszustand gegeben ist, wenn der Reflexfleck dezentral in Bezug auf die Servosteuerungspunkt-Position auftrifft, oder
• eine Kamera, wobei die Kamera einen lichtempfindlichen Detektor umfasst und wobei der auf das Ziel ausgerichtete Zustand gegeben ist, wenn ein Bild des retroreflektierenden Ziels an einer definierten, insbesondere durch Kalibrierungsdaten definierten Servosteuerungspunkt-Position des lichtempfindlichen Detektors erzeugt wird, und wobei der fehlausgerichtete Zielausrichtungszustand gegeben ist, wenn das Bild dezentral in Bezug auf die Servosteuerungspunkt-Position erzeugt wird.

4. Vermessungsinstrument nach einem der vorhergehenden Ansprüche, **dadurch gekennzeichnet, dass** der Messstrahl zwei Teilmessstrahlen umfasst, wobei ein erster Teilmessstrahl dafür geeignet ist, zur Erzeugung einer Anzeige eines Zielausrichtungszustands auf dem Zielausrichtungszustands-Anzeiger verwendet zu werden, und wobei ein zweiter Teilmessstrahl dafür geeignet ist, zur Durchführung der Entfernungsmessung verwendet zu werden.

5. Vermessungsinstrument nach einem der vorhergehenden Ansprüche, **dadurch gekennzeichnet, dass** das Vermessungsinstrument Folgendes umfasst:
• eine Basis (13),
• eine Halterung (14), die drehbar auf der Basis (13) montiert ist, sodass sie um eine erste Drehachse (16) drehbar ist,
• einen Träger (15), der drehbar auf der Halterung (14) montiert ist, sodass er um eine zweite Drehachse (17) drehbar ist,
• eine Winkelbestimmungseinheit zum Erfassen erster Winkeldaten in Bezug auf eine Drehung der Halterung (14) um die erste Drehachse (16),
• eine Winkelbestimmungseinheit zum Erfassen zweiter Winkeldaten in Bezug auf eine Drehung des Trägers (15) um die zweite Drehachse (17),
wobei der Messstrahl vom Träger (15) ausgesendet wird.

6. Vermessungsinstrument nach Anspruch 5, **dadurch gekennzeichnet, dass** der fehlausgerichtete Zielausrichtungszustand erzeugt wird durch
• Drehen des Trägers (15) um mindestens die erste Drehachse (16) oder die zweite Drehachse (17) oder
• Schwenken eines Strahlablenkungselements (6) in den Strahlengang des Messstrahls, insbesondere wenn das Strahlablenkungselement (6) in der optischen Einheit (6, 8) enthalten ist, wobei insbesondere mindestens ein Strahlablenkungselement (6) ein Spiegel, ein Prisma, ein Polygon, ein doppelter optischer Keil, ein Brechungselement, eine bewegliche optische Faser oder ein MOEMS-Element ist, wobei der Effekt der Strahlablenkung insbesondere durch Verschiebung und/oder Neigen des Strahlablenkungselements (6) und/oder elektrooptische Steuerung der optischen (brechenden) Eigenschaften des Strahlablenkungselements (6) erzielt wird.

7. Vermessungsinstrument nach einem der vorhergehenden Ansprüche, **dadurch gekennzeichnet, dass** ein beugendes optisches Element in den optischen Strahlengang des Messstrahls eingefügt ist, wobei das beugende optische Element insbesondere ein beweglicher Diffusor, ein optischer Keil oder eine Nahbereichsdivergenzlinse ist.

8. Vermessungsinstrument nach einem der vorhergehenden Ansprüche, **dadurch gekennzeichnet, dass** die Differenz zwischen dem auf das Ziel ausgerichteten Zustand und dem fehlausgerichteten Zustand eingestellt, insbesondere automatisch eingestellt wird, und zwar
• in Abhängigkeit von einer Entfernung zum retroreflektierenden Ziel (12) oder
• auf der Grundlage einer Signalstärke des reflektierten Messstrahls (5), wobei die Signalstärke von dem angezeigten Zielausrichtungszustand abhängt, der vom Detektor (1) detektiert wird.

9. Verfahren zur Entfernungsmessung zur Bestimmung einer Entfernung zwischen einem Vermessungsinstrument, insbesondere einem Theodoliten, einer Totalstation, einem Lasertracker oder einer Maschine zur Bauwerkinformationsmodellierung (BIM), und einem retroreflektierenden Ziel (12), wobei das Vermessungsinstrument Folgendes aufweist:
• eine Strahlungsquelle (9),
• eine optische Einheit (6, 8), die eine Zielausrichtungsachse definiert,
• einen Detektor (1), der für Entfernungsmessungen geeignet ist, wobei der Detektor (1) dafür konfiguriert ist, mindestens einen Teil eines von dem retroreflektierenden Ziel (12) reflektierten Messstrahls (5) zu detektieren,
• wobei der Detektor (1) durch mindestens eine Komponente (6) der optischen Einheit (6, 8) abgeschattet (3) ist, und
• einen Zielausrichtungszustands-Anzeiger zum Anzeigen eines Zielausrichtungszustands in Bezug auf das retroreflektierende Ziel (12), wobei ein auf das Ziel ausgerichteter Zustand gegeben ist, in dem der Zielausrichtungszustands-Anzeiger eine definierte Ausgabe erzeugt, die insbesondere durch Kalibrierungsdaten definiert ist und angibt, dass keine Fehlausrichtung in Bezug auf das retroreflektierende Ziel (12) auftritt,
wobei das Verfahren die folgenden Schritte beinhaltet:
• Anvisieren des retroreflektierenden Ziels (12) und Detektieren eines Zielausrichtungszustands mit dem Zielausrichtungszustands-Anzeiger,
• Erzeugen eines Messstrahls in der Strahlungsquelle (9),
• Aussenden und Empfangen mindestens eines Teils des Messstrahls (10, 11) durch die optische Einheit (6, 8), wobei der ausgesendete Messstrahl (10, 11) in Richtung des mindestens einen retroreflektierenden Ziels (12) ausgesendet wird,
• Empfangen mindestens eines Teils des retroreflektierten Messstrahls (5) und Detektieren desselben mit dem Detektor (1), wodurch die Entfernung zwischen dem Vermessungsinstrument und dem retroreflektierenden Ziel (12) gemessen wird,
**dadurch gekennzeichnet, dass** bei der Durchführung einer Entfernungsmessung
• das Anvisieren des retroreflektierenden Ziels (12) so erfolgt, dass ein fehlausgerichteter Zielausrichtungszustand durch den Zielausrichtungszustands-Anzeiger angezeigt wird, wobei in diesem fehlausgerichteten Zielausrichtungszustand der Zielausrichtungszustands-Anzeiger eine definierte Ausgabe erzeugt, die angibt, dass der Messstrahl von dem retroreflektierenden Ziel (12) reflektiert wird, sodass eine Fehlausrichtung in Bezug auf das retroreflektierende Ziel (12) auftritt, und
• der Schritt des Detektierens des reflektierten Messstrahls (5) mit dem Detektor (1) in dem fehlausgerichteten Zielausrichtungszustand erfolgt.

10. Verfahren, **dadurch gekennzeichnet, dass** das Verfahren Folgendes umfasst:
• Anvisieren des retroreflektierenden Ziels (12) mit dem Messstrahl, sodass ein auf das Ziel ausgerichteter Zustand durch den Zielausrichtungszustands-Anzeiger angezeigt wird,
• Bestimmen der Zielrichtung auf der Grundlage des angezeigten auf das Ziel ausgerichteten Zustands,
• Durchführen einer Entfernungsmessung nach Anspruch 9.

11. Verfahren nach Anspruch 9 oder 10, **dadurch gekennzeichnet, dass** der Messstrahl durch Schwenken eines Strahlablenkungselements (6) in den Strahlengang des Messstrahls in Bezug auf die Zielausrichtungsachse abgelenkt wird.

12. Verfahren nach einem der Ansprüche 9 bis 11, wobei das Vermessungsinstrument ferner Folgendes aufweist:
• eine Basis (13),
• eine Halterung (14), die drehbar auf der Basis (13) montiert ist, sodass sie um eine erste Drehachse (16) drehbar ist,
• einen Träger (15), der drehbar auf der Halterung (14) montiert ist, sodass er um eine zweite Drehachse (17) drehbar ist,
• eine Winkelbestimmungseinheit zum Erfassen erster Winkeldaten in Bezug auf eine Drehung der Halterung (14) um die erste Drehachse (16),
• eine Winkelbestimmungseinheit zum Erfassen zweiter Winkeldaten in Bezug auf eine Drehung der Halterung (15) um die zweite Drehachse (17),
**dadurch gekennzeichnet, dass** der Messstrahl von dem Träger (15) ausgesendet wird und der Träger (15) um mindestens die erste Drehachse (16) oder die zweite Drehachse (17) gedreht wird, wodurch der Messstrahl so gelenkt wird, dass der fehlausgerichtete Zustand erzeugt wird.

13. Verfahren nach einem der Ansprüche 9 bis 12, **dadurch gekennzeichnet, dass** ein beugendes optisches Element in den optischen Strahlengang des Messstrahls eingefügt wird, wobei das beugende optische Element insbesondere ein beweglicher Diffusor, ein optischer Keil oder eine Nahbereichsdivergenzlinse ist, sodass der Messstrahl homogenisiert wird, bevor er auf den Retroreflektor oder die Detektoroberfläche des Detektors (1) auftrifft.

14. Verfahren nach den Ansprüchen 9 bis 13, **dadurch gekennzeichnet, dass** der Grad der Fehlausrichtung des Messstrahls automatisch eingestellt wird
• in Abhängigkeit von der Entfernung zum retroreflektierenden Ziel (12) oder
• auf der Grundlage einer winkelabhängigen Signalstärke des vom Detektor (1) detektierten reflektierten Messstrahls (5).

15. Computerprogrammprodukt mit einem Programmcode, **dadurch gekennzeichnet, dass** das Computerprogrammprodukt auf einem maschinenlesbaren Träger (15) gespeichert ist, insbesondere auf einem Vermessungsinstrument nach einem der Ansprüche 1 bis 8 gespeichert ist, oder Computerdatensignal zur Durchführung eines Verfahrens nach den Ansprüchen 9 bis 14.

## Revendications

1. Instrument d'arpentage pour la détermination des coordonnées 3D d'une cible rétroréfléchissante (12), en particulier un théodolite, une station totale, un dispositif de poursuite laser ou une machine de modélisation des données du bâtiment (MDB), l'instrument d'arpentage comprenant
• une source de rayonnement (9) pour générer un faisceau de mesure,
• une unité optique (6, 8) pour émettre et recevoir au moins une partie du faisceau de mesure et définir un axe de ciblage (7),
• un détecteur (1) qui est approprié pour des mesures de distance, dans lequel le détecteur (1) est configuré pour détecter au moins une partie du faisceau de mesure (5) réfléchi par la cible rétroréfléchissante (12),
• dans lequel le détecteur est ombragé (3) par au moins un composant (6) de l'unité optique (6, 8), et
• un indicateur d'état de ciblage configuré pour délivrer des informations indicatives d'un état de ciblage du faisceau de mesure émis (10, 11) par rapport à la cible rétroréfléchissante (12), dans lequel un état « sur la cible » est donné dans lequel l'indicateur d'état de ciblage délivre des informations décrivant que le faisceau de mesure est réfléchi par la cible rétroréfléchissante (12) sans décalage de faisceau,
**caractérisé en ce que** l'instrument d'arpentage est configuré pour, lors de la réalisation d'une mesure de distance, automatiquement
• cibler la cible rétroréfléchissante (12) avec le faisceau de mesure, de telle sorte que l'indicateur d'état de ciblage délivre des informations indicatives d'un état de ciblage désaligné, dans lequel l'indicateur d'état de ciblage délivre des informations décrivant que le faisceau de mesure est réfléchi par la cible rétroréfléchissante (12) avec un décalage de faisceau, et
• détecter, avec le détecteur (1), le faisceau de mesure réfléchi (5) dans l'état de ciblage désaligné.

2. Instrument d'arpentage selon la revendication 1, **caractérisé en ce que** l'instrument d'arpentage est configuré pour, lors de la réalisation de la mesure de distance, cibler la cible rétroréfléchissante (12) de manière que le faisceau de mesure soit déplacé, de sorte que le faisceau de mesure soit au plus partiellement ombragé, de préférence pas du tout ombragé, lorsqu'il frappe une surface de détection du détecteur (1).

3. Instrument d'arpentage selon la revendication 1 ou 2, **caractérisé en ce que** l'indicateur d'état de ciblage comprend
• un détecteur de zone pour générer l'indication de l'état de ciblage, dans lequel l'état « sur la cible » est donné si un point de réflexion du faisceau de mesure réfléchi frappe une position de point de servocommande définie, en particulier définie par des données d'étalonnage, du détecteur de zone, et dans lequel l'état de ciblage désaligné est donné si le point de réflexion frappe de manière décentralisée concernant la position du point de servocommande, ou
• une caméra, dans lequel la caméra comprend un détecteur photosensible, et dans lequel l'état « sur la cible » est donné si une image de la cible rétroréfléchissante est générée à une position de point de servocommande définie, en particulier définie par des données d'étalonnage, du détecteur photosensible, et dans lequel l'état de ciblage désaligné est donné si l'image est générée de manière décentrée concernant la position de point de servocommande.

4. Instrument d'arpentage selon l'une quelconque des revendications précédentes, **caractérisé en ce que** le faisceau de mesure comprend deux faisceaux de mesure partiels, dans lequel un premier faisceau de mesure partiel est approprié pour être utilisé pour générer une indication d'un état de ciblage sur l'indicateur d'état de ciblage et un deuxième faisceau de mesure partiel est approprié pour être utilisé pour réaliser la mesure de distance.

5. Instrument d'arpentage selon l'une quelconque des revendications précédentes, **caractérisé en ce que** l'instrument d'arpentage comprend
• une base (13),
• un support (14), qui est monté de manière rotative sur la base (13) de façon à pouvoir être rotatif autour d'un premier axe de rotation (16),
• un porteur (15), qui est monté de manière rotative sur le support (14), de façon à pouvoir être rotatif autour d'un deuxième axe de rotation (17),
• une unité de détermination d'angle pour acquérir des premières données d'angle par rapport à une rotation du support (14) autour du premier axe de rotation (16),
▪ une unité de détermination d'angle pour acquérir des deuxièmes données d'angle par rapport à une rotation du porteur (15) autour du deuxième axe de rotation (17),
dans lequel le faisceau de mesure est émis à partir du porteur (15).

6. Instrument d'arpentage selon la revendication 5, **caractérisé en ce que** l'état de ciblage désaligné est généré par
• la rotation du porteur (15) autour d'au moins le premier axe de rotation (16) ou le deuxième axe de rotation (17), ou
• le pivotement d'un élément de déviation de faisceau (6) dans le trajet optique du faisceau de mesure, en particulier lorsque l'élément de déviation de faisceau (6) est compris dans l'unité optique (6, 8), en particulier au moins un élément de déviation de faisceau (6) étant un miroir, un prisme, un polygone, un double coin optique, un élément réfractif, une fibre optique mobile ou un élément MOEMS, dans lequel l'effet de déviation de faisceau est en particulier obtenu par le déplacement et/ou le basculement de l'élément de déviation de faisceau (6) et/ou la commande électro-optique des propriétés optiques (réfractives) de l'élément de déviation de faisceau (6).

7. Instrument d'arpentage selon l'une quelconque des revendications précédentes, **caractérisé en ce qu'un** élément optique diffractif est inséré dans le trajet optique du faisceau de mesure, l'élément optique diffractif étant en particulier un diffuseur mobile, un coin optique, ou une lentille à divergence à courte portée.

8. Instrument d'arpentage selon l'une quelconque des revendications précédentes, **caractérisé en ce que** la différence entre l'état « sur la cible » et l'état désaligné est ajustée, en particulier automatiquement ajustée,
• en fonction d'une distance à la cible rétroréfléchissante (12), ou
• sur la base d'une intensité de signal du faisceau de mesure réfléchi (5), l'intensité du signal dépendant de l'état de ciblage indiqué, détecté par le détecteur (1).

9. Procédé de mesure de distance pour la détermination d'une distance entre un instrument d'arpentage, en particulier un théodolite, une station totale, un dispositif de poursuite laser ou une machine de modélisation des données du bâtiment (MDB), et une cible rétroréfléchissante (12), l'instrument d'arpentage comportant
• une source de rayonnement (9)
• une unité optique (6, 8), définissant un axe de ciblage,
• un détecteur (1) qui est approprié pour des mesures de distance, dans lequel le détecteur (1) est configuré pour détecter au moins une partie d'un faisceau de mesure (5) réfléchi par la cible rétroréfléchissante (12),
• dans lequel le détecteur (1) est ombragé (3) par au moins un composant (6) de l'unité optique (6, 8), et
• un indicateur d'état de ciblage pour indiquer un état de ciblage par rapport à la cible rétroréfléchissante (12), dans lequel un état « sur la cible » est donné dans lequel l'indicateur d'état de ciblage génère une sortie définie, en particulier définie par des données d'étalonnage, décrivant qu'aucun désalignement par rapport à la cible rétroréfléchissante (12) ne se produit,
le procédé comprenant les étapes suivantes :
• le ciblage de la cible rétroréfléchissante (12) et la détection d'un état de ciblage avec l'indicateur d'état de ciblage,
• la génération d'un faisceau de mesure dans la source de rayonnement (9),
• l'émission et la réception d'au moins une partie du faisceau de mesure (10, 11) par l'intermédiaire de l'unité optique (6, 8), dans lequel le faisceau de mesure émis (10, 11) est émis vers l'au moins une cible rétroréfléchissante (12),
• la réception d'au moins une partie du faisceau de mesure rétroréfléchi (5) et la détection de celui-ci à l'aide du détecteur (1), mesurant ainsi la distance entre l'instrument d'arpentage et la cible rétroréfléchissante (12),
**caractérisé en ce que,** lors de la réalisation d'une mesure de distance,
• le ciblage sur la cible rétroréfléchissante (12) est effectué de telle sorte qu'un état de ciblage désaligné est indiqué par l'indicateur d'état de ciblage, état de ciblage désaligné dans lequel l'indicateur d'état de ciblage génère une sortie définie décrivant que le faisceau de mesure est réfléchi par la cible rétroréfléchissante (12), de telle sorte qu'un désalignement par rapport à la cible rétroréfléchissante (12) se produit, et
• l'étape de détection, avec le détecteur (1), du faisceau de mesure réfléchi (5) est effectuée dans l'état de ciblage désaligné.

10. Procédé **caractérisé en ce que** le procédé comprend
• le ciblage de la cible rétroréfléchissante (12) avec le faisceau de mesure, de telle sorte qu'un état « sur la cible » soit indiqué par l'indicateur d'état de ciblage,
• la détermination de la direction de ciblage, sur la base de l'état « sur la cible » indiqué,
• la réalisation d'une mesure de distance selon la revendication 9.

11. Procédé selon la revendication 9 ou 10, **caractérisé en ce que** le faisceau de mesure est dévié par rapport à l'axe de ciblage en faisant pivoter un élément de déviation de faisceau (6) dans le trajet optique du faisceau de mesure.

12. Procédé selon l'une quelconque des revendications 9 à 11, l'instrument d'arpentage comportant en outre
• une base (13),
• un support (14), qui est monté de manière rotative sur la base (13) de façon à pouvoir être rotatif autour d'un premier axe de rotation (16),
• un porteur (15), qui est monté de manière rotative sur le support (14), de façon à pouvoir être rotatif autour d'un deuxième axe de rotation (17),
• une unité de détermination d'angle pour acquérir des premières données d'angle par rapport à une rotation du support (14) autour du premier axe de rotation (16),
• une unité de détermination d'angle pour acquérir des deuxièmes données d'angle par rapport à une rotation du porteur (15) autour du deuxième axe de rotation (17),
**caractérisé en ce que** le faisceau de mesure est émis à partir du porteur (15), et le porteur (15) est en rotation autour d'au moins le premier axe de rotation (16) ou le deuxième axe de rotation (17), orientant ainsi le faisceau de mesure de telle manière que l'état de désalignement soit généré.

13. Procédé selon l'une quelconque des revendications 9 à 12, **caractérisé en ce qu'**un élément optique diffractif est inséré dans le trajet optique du faisceau de mesure, l'élément optique diffractif étant en particulier un diffuseur mobile, un coin optique, ou une lentille à divergence de courte portée, de telle sorte que le faisceau de mesure est homogénéisé avant d'atteindre le rétroréflecteur ou la surface de détection du détecteur (1).

14. Procédé selon les revendications 9 à 13, **caractérisé en ce que** le niveau de désalignement du faisceau de mesure est automatiquement ajusté
• en fonction de la distance à la cible rétroréfléchissante (12), ou
• sur la base d'une intensité de signal dépendante de l'angle, du faisceau de mesure réfléchi (5) détecté par le détecteur (1).

15. Programme d'ordinateur doté d'un code de programme, **caractérisé en ce que** le programme d'ordinateur est sauvegardé sur un support lisible par machine (15), en particulier sauvegardé sur un instrument d'arpentage selon l'une quelconque des revendications 1 à 8, ou un signal de données informatiques pour la mise en œuvre d'un procédé selon les revendications 9 à 14.
